# NEUE EUROPÄISCHE PATENTSCHRIFT

(11) **EP 0 601 007 B2**
(45) Veröffentlichungstag und Bekanntmachung des Hinweises auf die Entscheidung über den Einspruch: **12.03.2003**
(45) Hinweis auf die Patenterteilung: 27.09.1995
(21) Anmeldenummer: 92918205.3
(22) Anmeldetag: 25.08.1992
(51) Int. Cl.: C04B 28/14, C04B 40/00, B01F 5/06

(54) **VERFAHREN ZUR HERSTELLUNG VON WASSERABWEISENDEN PORÖSEN GIPSFORMKÖRPERN**
PROCESS FOR PRODUCING WATER-REPELLENT, POROUS PLASTER MOULDED BODIES
PROCEDE DE FABRICATION DE CORPS POREUX HYDROPHOBES MOULES EN PLATRE

(30) Priorität: 27.08.1991 DE 4128424
(43) Veröffentlichungstag der Anmeldung: 15.06.1994
(73) Patentinhaber: GE Bayer Silicones GmbH & Co. KG, 40699 Erkrath (DE)
(72) Erfinder: STANZINGER, Emil, A-8940 Weissenbach (AT); NEUNER, Karl-Heinz, A-8940 Weissenbach (AT); WINTZHEIMER, Engelbert, D-8715 Iphofen (DE); MARTIN, Jürgen, D-8711 Kleinlangheim (DE)
(86) Internationale Anmeldenummer: EP9201944
(87) Internationale Veröffentlichungsnummer: WO93004009

(56) Entgegenhaltungen:
- EP-A- 0 171 018
- EP-A- 0 212 290
- EP-A- 0 278 518
- DE-A- 4 124 892
- GB-A- 1 389 508
- DATABASE WPIL, Week 8115, Derwent Publications Ltd., London (GB); AN 81-26418D

## Beschreibung

Gegenstand der vorliegenden Erfindung ist ein Verfahren zur Herstellung von wasserabweisenden porösen Gipsformkörpern, insbesondere poröser Gipsplatten, aus den Komponenten Gipspulver, Anmachwasser, Schaum sowie gegebenenfalls weiteren üblichen Zusätzen durch Zusatz von Alkylwasserstoffpolysiloxanen.

Aus der DE-AS-1 223 287 ist ein Verfahren bekannt zum Herstellen von wasserabweisenden Formkörpern und Überzügen aus durch Zusatz von Wasser erhärtenden anorganischen Massen, bei dem zur Erzielung der Wasserabweisung den anorganischen Massen vor der Formgebung Organosiliciumverbindungen zugesetzt werden in Form wäßriger Emulsionen. Diese vorgefertigten Emulsionen haben sich zwar in der Praxis gut bewährt, sie sind jedoch deutlich teurer als die in Form von öligen Flüssigkeiten angebotenen Organosiliciumverbindungen in nicht emulgierter Form.

Aus der DE-OS 27 40 049 ist bekannt, dem Gipspulver in Abwesenheit von Wasser lineare Monomethylpolysiloxane zuzumischen und erst dann diesen Gips mit Wasser anzurühren. Dieses Verfahren hat sich in der Praxis nicht bewährt, da einerseits der Bedarf an Monomethylpolysiloxan relativ hoch ist und andererseits ein derartig vorbehandeltes Gipspulver sich wesentlich schlechter verarbeiten läßt.

Aus der EP-PS 0 171 018 ist ein Verfahren bekannt, bei dem wasserabweisende poröse Gipsformkörper hergestellt werden mit Alkylwasserstoffpolysiloxanen, indem man aus Wasser, Tensid und Polyalkylwasserstoffsiloxan einen Schaum erzeugt und diesen Schaum dem wäßrigen Gipsbrei, bestehend aus Anmachwasser, Gipspulver sowie gegebenenfalls weiteren üblichen Zusätzen, zugibt. Dieses Verfahren hat sich in der Praxis bewährt, sofern sehr spezielle Parameter eingehalten werden, die jedoch in der Patentschrift nicht genannt sind. Ein wesentlicher Nachteil dieses Verfahrens besteht darin, daß in der Praxis bei der Herstellung von Gipsplatten auf entsprechenden Großanlagen die Dosierung des angerührten Gipsbreis unter anderem reguliert wird durch Variation der zugesetzten Schaummenge. Die schwankenden Schaummengen führen daher auch zu verschieden starker Hydrophobierung des Endproduktes.

Die vorliegende Erfindung hat sich die Aufgabe gestellt, ein Verfahren zur Herstellung von wasserabweisenden porösen Gipsformkörpern, insbesondere porösen Gipsplatten, zu entwickeln, bei dem aus den Komponenten Gipspulver, Anmachwasser, Schaum sowie gegebenenfalls weiteren üblichen Zusätzen und Alkylwasserstoffpolysiloxanen einwandfreie Produkte entstehen, ohne daß es nötig ist, die Alkylwasserstoffpolysiloxane in Form von vorgefertigten Emulsionen oder in Form eines unmittelbar vor der Herstellung erzeugten Schaumes einzusetzen. Es sollte somit versucht werden, die Vorteile der gleichmäßigen Dosierung der Alkylwasserstoffpolysiloxane bei Zusatz von Emulsionen zu kombinieren mit den wesentlich niedrigeren Kosten bei Zusatz der Alkylwasserstoffpolysiloxane zum Schaum, wobei jedoch als Nachteil in Kauf genommen werden mußte, daß die Zudosierung verschieden großer Schaummengen auch zu Schwankungen in der Hydrophobierung führt.

Diese Aufgabe konnte jetzt überraschend einfach dadurch gelöst werden, daß die Alkylwasserstoffpolysiloxane nicht der Schaumerzeugung, sondern dem Anmachwasser oder Teilströmen desselben zugesetzt werden, welche übliche Zusätze, aber keine schaumbildenden Substanzen enthalten, woraufhin das Gemisch in einem mehrere Meter langen Rohr mit turbulenter Strömung intensiv vermischt wird, wie es im Anspruch 1 beansprucht ist.

Dieses Ergebnis war aufgrund des Standes der Technik keinesfalls vorhersehbar. Noch in der EP-PS 0 171 018 wird in Spalte 1, Zeilen 27 bis 39 ausdrücklich festgestellt, daß es in der Praxis unmöglich ist, das Öl aufgrund seiner Wasserunlöslichkeit im wäßrigen Gipsbrei, bestehend aus Anmachwasser und Gipspulver, zu verteilen. Obwohl die Zugabe von nicht emulgierten Ölen die wesentlich wirtschaftlichere Form darstellt, gab es kein Verfahren, das Öl gleichmäßig im Gipsbrei zu verteilen.

Großtechnische Versuche in den bestehenden Produktionsanlagen der Anmelderin haben gezeigt, daß es erfindungsgemäß doch möglich ist, mit Öl zu arbeiten und dabei auf die Zudosierung bei der Schaumerzeugung zu verzichten. Von entscheidender Bedeutung ist, daß die Alkylwasserstoffpolysiloxane als Öl mit dem Anmachwasser in einem mehrere Meter langem Rohr mit turbulenter Strömung intensiv vermischt werden, bevor sie mit dem Gipspulver in Berührung kommen. Für eine derartige intensive Vermischung reichen 2 m Rohr gerade aus. Rohrlängen von 4 bis 6 m haben sich exzellent bewährt. Noch längere Rohre können zwar eingesetzt werden, jedoch wird hierbei der Effekt nicht weiter verbessert; es sei denn, die benötigte Menge Anmachwasser benötigt relativ große Rohrdurchmesser. Um turbulente Strömungen in dem Rohr zu erzeugen, sollte nämlich der Rohrdurchmesser nur maximal 2% der Rohrlänge betragen. Vorzugsweise wählt man Rohrdurchmesser von 0,1 bis 1% der Rohrlänge. Bei turbulenten Strömungen bildet sich in einem Rohr erst nach 50 bis 100 Rohrdurchmessern ein konstantes zeitlich gemitteltes Geschwindigkeitsprofil in Strömungsrichtung aus. Die Reynoldsche Zahl spielt dann keine Rolle mehr. Unter diesen turbulenten Strömungsbedingungen lassen sich Wasser und Siliconöl zu einer Emulsion verarbeiten, die unmittelbar verarbeitet werden kann.

Die Untersuchungen haben ergeben, daß es nicht nur möglich ist, die Alkylwasserstoffpolysiloxane dem Hauptstrom des Anmachwassers zuzusetzen, sondern daß es ebenso gut möglich ist, die Alkylwasserstoffpolysiloxane den verschiedenen Teilströmen zuzusetzen, welche übliche Zusätze, aber keine schaumbildenden Substanzen enthalten. Besonders bewährt hat sich der Zusatz zu dem Teilstrom, der eine angemachte Papierpülpe enthält. Da jedoch nicht alle porösen Gipsplatten Papierpülpe enthalten, kann man die Alkylwasserstoffpolysiloxane auch dem Teilstrom zusetzen, welcher nicht schaumbildende oberflächenaktive Substanzen enthält, die vor allem als Verflüssiger wirken wie zum Beispiel Ligninsulfonate. Schließlich kann man die Alkylwasserstoffpolysiloxane auch dem Teilstrom zusetzen, der verkleisterte Stärke enthält. Diese Teilströme sind somit stets Suspensionen, Emulsionen oder Lösungen, aber keine Schäume.

Als weiterer überraschender Vorteil wurde festgestellt, daß erfindungsgemäß der Verbrauch an Schäumungsmittel um ca. 20 % gesenkt werden kann gegenüber einem Verfahren, bei dem das Siliconöl dem Schaumerzeuger zugesetzt wird. Es wird somit dem fertigen Gipsbrei zu seiner Auflokkerung ein Schaum zugemischt, der kein Siliconöl enthält.

Die Untersuchung der fertigen Gipsplatten hat ergeben, daß die Qualität der erfindungsgemäßen Gipsplatten völlig vergleichbar ist mit Produkten, bei denen das Siliconöl der Schaumanlage zugeführt wurde.

### Ausführungsbeispiel

In einer großtechnischen Anlage zur Herstellung von Gipskartonplatten wurde bisher ca. 0,25 Gew.-% Siliconöl, bezogen auf eingesetzten trokkenen Gips, in den Schaumerzeuger eingespeist und in Form des Schaumes, der mit Wasser und mit sonstigen Zusätzen angemachten Gipsmasse zugesetzt. Es wurde dann umgestellt auf die Einspeisung des Siliconöls am Anfang des ca. 6 m langen Zuleitungsrohres für Anmachwasser. Der Durchmesser betrug 2 Zoll, die Wassermenge ca. 100 l/min. Es entstand dabei eine Emulsion, die aus Siliconöl in Wasser bestand. Sie wurde unmittelbar mit dem trockenen Gipspulver vermischt, wobei ein Gipsbrei entstand. Dieser Gipsbrei wurde zu seiner Auflockerung mit vorgefertigtem Schaum aus Schäumungsmittel und Wasser vermischt und zu Gipskartonplatten verarbeitet. Es können bis zu 0,1 Gew.-% Ligninsulfonat als Verflüssiger zugesetzt werden. Die Menge an Siliconöl blieb unverändert. Der Verbrauch an Schäumungsmittel im Schaumerzeuger wurde um ca. 20% gesenkt. Die fertigen Platten wiesen völlig vergleichbare gute Eigenschaften auf. Die Wasseraufnahme nach zwei Stunden betrug in allen Fällen 9,0 ± 0,5 %.

## Patentansprüche (Patentansprüche für folgende(n) Vertragsstaat(en): DE)

1. Verfahren zur Herstellung von wasserabweisenden porösen Gipsformkörpern, insbesondere poröser Gipsplatten, aus den Komponenten Gipspulver, Anmachwasser, Schaum sowie gegebenenenfalls weiteren üblichen Zusätzen durch Zusatz von Alkylwasserstoffpolysiloxanen, **dadurch gekennzeichnet, daß** die Alkylwasserstoffpolysiloxane nicht der Schaumerzeugung, sondern dem Anmachwasser oder Teilströmen desselben zugesetzt werden, welche übliche Zusätze, aber keine schaumbildenden Substanzen enthalten, woraufhin das Gemisch in einem mehrere Meter langen Rohr mit turbulenter Strömung intensiv vermischt wird, wobei das Rohr mindestens 2 m lang ist und der Rohrdurchmesser nur maximal 2 % der Rohrlänge beträgt.

2. Verfahren gemäß Anspruch 1, **dadurch gekennzeichnet, daß** die Alkylwasserstoffpolysiloxane zugesetzt werden dem Teilstrom einer angemachten Papierpülpe.

3. Verfahren gemäß Anspruch 1, **dadurch gekennzeichnet, daß** die Alkylwasserstoffpolysiloxane zugesetzt werden dem Teilstrom enthaltend nicht schaumbildende oberflächenaktive Substanzen.

4. Verfahren gemäß Anspruch 1, **dadurch gekennzeichnet, daß** die Alkylwasserstoffpolysiloxane zugesetzt werden dem Teilstrom enthaltend verkleisterte Stärke.

## Patentansprüche (Patentansprüche für folgende(n) Vertragsstaat(en): AT, BE, CH, DK, ES, FR, GB, LI, NL, SE)

1. Verfahren zur Herstellung von wasserabweisenden porösen Gipsformkörpern, insbesondere poröser Gipsplatten, aus den Komponenten Gipspulver, Anmachwasser, Schaum sowie gegebenenenfalls weiteren üblichen Zusätzen durch Zusatz von Alkylwasserstoffpolysiloxanen, **dadurch gekennzeichnet, daß** die Alkylwasserstoffpolysiloxane nicht der Schaumerzeugung, sondern dem Anmachwasser oder Teilströmen desselben zugesetzt werden, welche übliche Zusätze, aber keine schaumbildenden Substanzen enthalten, woraufhin das Gemisch in einem mehrere Meter langen Rohr mit turbulenter Strömung intensiv vermischt wird.

2. Verfahren gemäß Anspruch 1, **dadurch gekennzeichnet, daß** die Alkylwasserstoffpolysiloxane zugesetzt werden dem Teilstrom einer angemachten Papierpülpe.

3. Verfahren gemäß Anspruch 1, **dadurch gekennzeichnet, daß** die Alkylwasserstoffpolysiloxane zugesetzt werden dem Teilstrom enthaltend nicht schaumbildende oberflächenaktive Substanzen.

4. Verfahren gemäß Anspruch 1, **dadurch gekennzeichnet, daß** die Alkylwasserstoffpolysiloxane zugesetzt werden dem Teilstrom enthaltend verkleisterte Stärke.

## Claims (Claims for the following Contracting State(s): DE)

1. Process for the production of water-repellent, porous plaster moulded articles, in particular porous plaster panels, from the components plaster powder, mixing water, foam and optionally other conventional additives, by the addition of alkyl hydrogen polysiloxanes, **characterised in that** the alkyl hydrogen polysiloxanes are added not to the foam production but to the mixing water or to partial streams thereof that contain conventional additives but no foam-forming substances, and then the mixture is intensively mixed in a tube several meters long with turbulent flow, the tube being at least 2 m long and the tube diameter only a maximum of 2% of the tube length.

2. Process according to claim 1, **characterised in that** the alkyl hydrogen polysiloxanes are added to the partial stream of a mixed paper pulp.

3. Process according to claim 1, **characterised in that** the alkyl hydrogen polysiloxanes are added to the partial stream containing non-foaming surface-active substances.

4. Process according to claim 1, **characterised in that** the alkyl hydrogen polysiloxanes are added to the partial stream containing gelatinised starch.

## Claims (Claims for the following Contracting State(s): AT, BE, CH, DK, ES, FR, GB, LI, NL, SE)

1. Process for the production of water-repellent porous gypsum moulded articles, in particular porous gypsum panels, from the components gypsum powder, tempering water, foam, as well as optionally further conventional additives by addition of alkyl hydrogen polysiloxanes, **characterised in that** the alkyl hydrogen polysiloxanes are not added to the foam production but to the tempering water or partial streams thereof, which latter contain conventional additives but no foam-forming substances, following which the mixture is intensively mixed under turbulent flow in a tube several metres long.

2. Process according to claim 1, **characterised in that** the alkyl hydrogen polysiloxanes are added to the partial stream of a tempered paper pulp.

3. Process according to claim 1, **characterised in that** the alkyl hydrogen polysiloxanes are added to the partial stream containing non-foam-forming surfactants.

4. Process according to claim 1, **characterised in that** the alkyl hydrogen polysiloxanes are added to the partial stream containing gelatinised starch.

## Revendications (Revendications pour l'(les) Etat(s) contractant(s) suivant(s): DE)

1. Procédé de production de corps façonnés poreux hydrofuges en plâtre, notamment de plaques poreuses en plâtre, à partir de composants consistant en plâtre en poudre, eau de gâchage, mousse ainsi que, le cas échéant, d'autres additifs classiques, par adjonction d'alkylhydrogénopolysiloxanes, **caractérisé en ce que** les alkylhydrogénopolysiloxanes ne sont pas ajoutés à la production de la mousse, mais à l'eau de gâchage ou à des courants partiels de cette eau qui contiennent des additifs classiques, mais qui ne contiennent pas de substances moussantes, après quoi le mélange est brassé avec écoulement turbulent dans un tube de plusieurs mètres de longueur, le tube ayant au moins 2 m de longueur et le diamètre du tube n'atteignant au maximum que 2 % de sa longueur.

2. Procédé suivant la revendication 1, **caractérisé en ce que** les alkylhydrogénopolysiloxanes sont ajoutés au courant partiel d'une pâte à papier détrempée.

3. Procédé suivant la revendication 1, **caractérisé en ce que** les alkylhydrogénopolysiloxanes sont ajoutés au courant partiel contenant des substances tensioactives non moussantes.

4. Procédé suivant la revendication 1, **caractérisé en ce que** les alkylhydrogénopolysiloxanes sont ajoutés au courant partiel contenant de l'amidon gélifié.

## Revendications (Revendications pour l'(les) Etat(s) contractant(s) suivant(s): AT, BE, CH, DK, ES, FR, GB, LI, NL, SE)

1. Procédé de production de corps façonnés poreux hydrofuges en plâtre, notamment de plaques poreuses en plâtre, à partir de composants consistant en plâtre en poudre, eau de gâchage, mousse ainsi que, le cas échéant, d'autres additifs classiques, par adjonction d'alkylhydrogénopolysiloxanes, **caractérisé en ce que** les alkylhydrogénopolysiloxanes ne sont pas ajoutés à la production de la mousse, mais à l'eau de gâchage ou à des courants de cette eau qui contiennent des additifs classiques, mais qui ne contiennent pas de substances moussantes, après quoi le mélange est brassé avec écoulement turbulent dans un tube de plusieurs mètres de longueur.

2. Procédé suivant la revendication 1, **caractérisé en ce que** les alkylhydrogénopolysiloxanes sont ajoutés au courant partiel d'une pâte à papier détrempée.

3. Procédé suivant la revendication 1, **caractérisé en ce que** les alkylhydrogénopolysiloxanes sont ajoutés au courant partiel contenant des substances tensioactives non moussantes.

4. Procédé suivant la revendication 1, **caractérisé en ce que** les alkylhydrogénopolysiloxanes sont ajoutés au courant partiel contenant de l'amidon gélifié.
